# EUROPEAN PATENT SPECIFICATION

(11) **EP 4 146 977 B1**
(45) Date of publication and mention of the grant of the patent: **27.08.2025**
(21) Application number: 21728767.1
(22) Date of filing: 07.05.2021
(51) Int. Cl.: F17C 7/04

(54) **METHOD FOR OPERATING A RELIQUEFACTION SYSTEM**
VERFAHREN ZUM BETREIBEN EINES RÜCKVERFLÜSSIGUNGSSYSTEMS
PROCÉDÉ DE FONCTIONNEMENT D'UN SYSTÈME DE RELIQUÉFACTION

(30) Priority: 08.05.2020 US 202063021868 P; 08.05.2020 US 202063021889 P; 08.05.2020 US 202063021880 P
(43) Date of publication of application: 15.03.2023
(73) Proprietor: L'AIR LIQUIDE, SOCIETE ANONYME POUR L'ETUDE ET L'EXPLOITATION DES PROCEDES GEORGES CLAUDE, 75007 Paris (FR); Air Liquide Advanced Technologies U.S. LLC, Houston, Texas 77024 (US)
(72) Inventor: GUERIF, Pierre-Philippe, Houston, TX 77024 (US); GUILLARD, Alain, Houston, TX 77024 (US); FLAVIEN, Gilles, Houston, TX 77024 (US); FOLLACA, Vincent, Houston, TX 77024 (US); KONG, Paul, Houston, TX 77024 (US)
(74) Representative: Air Liquide
(86) International application number: PCT/US2021/031392
(87) International publication number: WO 2021/226525

(56) References cited:
- CA-A- 607 039
- GB-A- 875 752
- JP-A- 2004 226 020
- JP-B2- 5 999 599
- US-A- 3 161 232
- US-A- 3 302 423
- US-A- 5 588 600

## Description

### Cross Reference to Related Applications

This application claims the benefit of priority under 35 U.S.C. § 119 (a) and (b) to U.S. Provisional Patent Application Nos. 63/021,868, 63/021,880, and 63/021,889, all filed May 8, 2020.

### Background

In some particular applications, a cryogenic liquid stream such as liquid nitrogen may be used for cooling purpose. In this case, the liquid nitrogen will usually, at least partially vaporize, and there will be a need to recondense this nitrogen vapor to avoid losses of nitrogen product and cold energy (refrigeration). A typical method used to recondense such a stream is to cool the gas and extract some enthalpy until the liquefaction is complete. The enthalpy extraction is typically performed via indirect thermal exchange with another fluid which will typically undergo some various steps of compression, cooling and pressure letdown in valves or/and turbines. A cryogenic fluid reliquefaction system is known from GB 875 752 A.

A typical alternate solution is to mix the gaseous stream with a subcooled liquid so that the direct thermal exchange between the gas and subcooled liquid will condense the gaseous stream. This mixing can typically be implemented in the vapor phase of a tank.

### Summary

A method for increasing the reliability and availability of a cryogenic fluid reliquefaction system is provided. The reliquefaction system may comprise at least N sub-coolers, the N sub-coolers comprising a motor and a compressor with a design capacity, and at least one variable speed system to control the speed of at least one motor, wherein N equals 2 or N is greater than 2.

The reliquefaction system comprising N-1 variable speed systems to be shared between the motors and compressors if N equals 2, or N-2 variable speed systems to be shared between the motors and compressors if N is greater than 2. The method comprising connecting a reliquefaction system to a liquid cryogenic fluid user which is then supplied a liquid cryogenic fluid, vaporizing the liquid cryogenic fluid within the liquid cryogenic fluid user, and sending the vaporized cryogenic fluid back to the main cryogenic tank. Wherein, when a first motor and compressor with a variable speed system is at or near design capacity, the first motor is disengaged from the variable speed system and connected to an existing power grid, thus freeing the variable speed system, the variable speed system is engaged to a second motor and compressor, the second motor and compressor is then started.

The reliquefaction system may comprise two different liquid cryogenic fluid users are provided liquid cryogenic fluid, utilizing two different main cryogenic tanks, with a common sub-cooler and recirculation loop, wherein the pressure in the two different main cryogenic tanks are controlled with pressure controllers acting on two different subcooled liquid cryogenic fluid valves. And or, the reliquefaction system may comprise at least one liquid cryogenic fluid user is provided refrigeration from two or more sub-cooling systems in a lead-lag arrangement, wherein the pressure in the main cryogenic tank is controlled with a pressure controller acting on outlet valves for each sub-cooler outlet valve.

### Brief Description of the Figures

For a further understanding of the nature and objects for the present invention, reference should be made to the following detailed description, taken in conjunction with the accompanying drawings, in which like elements are given the same or analogous reference numbers and wherein:
Figure 1 is a schematic representation of the basic overall system, accordance with one embodiment of the present invention.
Figure 2 is a schematic representation showing details of the liquid cryogenic users and main cryogenic tanks of a two-train system, accordance with one embodiment of the present invention.
Figure 3 is a schematic representation showing details of the sub-cooling systems of a two-train system, accordance with one embodiment of the present invention.
Figure 4 is a schematic representation of a Turbo Brayton system, accordance with one embodiment of the present invention.

### Element Numbers

102 = main cryogenic tank
103 = liquid cryogenic fluid stream
104 = vaporized cryogenic fluid stream
105 = vent valve
106 = sub-cooler
107 = warm recirculation stream
108 = subcooled recirculation stream
109 = recirculation control valve
110 = recirculation pump
111 = liquid buffer tank
112 = buffer tank transfer stream
113 = buffer tank transfer control valve
114 = liquid cryogenic fluid (in main cryogenic tank)
115 = cryogenic fluid vapor (in main cryogenic tank)
116 = liquid cryogenic fluid user
117 = external liquid cryogenic fluid source
118 = sub-cooler bypass line
119 = first pressure transmitter (in main cryogenic tank)
120 = first peripheral interface controller
122 = second pressure transmitter (in subcooler bypass line)
123 = second peripheral interface controller
124 = third peripheral interface controller
125 = bypass control valve
102A = first cryogenic tank
102B = second cryogenic tank
103A = first liquid cryogenic fluid stream
103B = second liquid cryogenic fluid stream
104A = first vaporized cryogenic fluid stream
104B = second vaporized cryogenic fluid stream
105A = first vent valve
105B = second vent valve
106A = first sub-cooler
106B = second sub-cooler
107 = warm recirculation stream
107A = first warm recirculation stream portion
107B = second warm recirculation stream portion
108 = subcooled recirculation stream
108A = first subcooled recirculation stream portion
108B = second subcooled recirculation stream portion
109A = first recirculation control valve
109B = second recirculation control valve
110A = first recirculation pump
110B = second recirculation pump
110C = transfer pump
114A = liquid cryogenic fluid (in first cryogenic tank)
114B = liquid cryogenic fluid (in second cryogenic tank)
115A = cryogenic fluid vapor (in second cryogenic tank)
115B = cryogenic fluid vapor (in second cryogenic tank)
116A = first liquid cryogenic fluid user
116B = second liquid cryogenic fluid user
119A = first pressure transmitter (in main cryogenic tank)
119B = second pressure transmitter (in main cryogenic tank)
120 = first peripheral interface controller
122 = second pressure transmitter (in subcooler bypass line)
123 = second peripheral interface controller
124 = third peripheral interface controller
125 = bypass control valve
126A = first pressure building coil
126B = second pressure building coil
127A = first pressure controller
127B = second pressure controller
128 = return conduit
129 = warm cryogenic liquid return stream
130 = warm recirculation feed stream
130A = first portion of warm recirculation feed stream
130B = second portion of warm recirculation feed stream
131 = warm cryogenic liquid supply line
132 = cooling water supply line
133 = cooling water return line

### Description of Preferred Embodiments

Illustrative embodiments of the invention are described below. While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

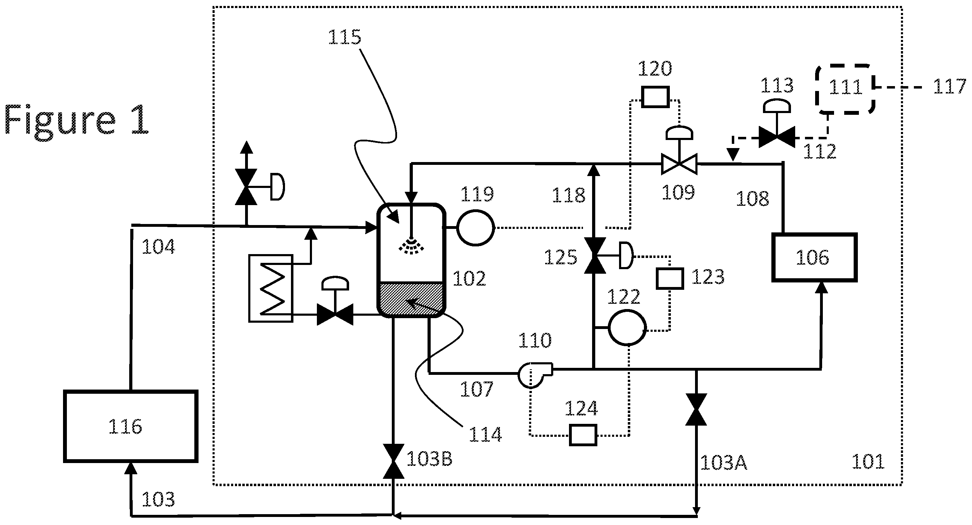

In the interest of simplicity, the following is a description of the basic operation of a simplified system with one cryogenic tank and one sub-cooler as illustrated in Figure 1. The element numbers are generic, but one of ordinary skill in the art would recognize that the description applies equally to the first train (**A**) or the second train (B). Details of the operation involving two cryogenic tanks and/or two sub-coolers are given below.

The system below describes the use of liquid nitrogen, but one skilled in the art will recognize that any suitable cryogenic fluid may be used with the same concept (oxygen, methane, etc...) depending on the temperature level required for cooling the targeted system.

Liquid nitrogen **114** is stored at saturated conditions (pressure P1) in main cryogenic Tank **102.** Nitrogen vapor **115** will occupy the headspace of main cryogenic tank **102.** During normal operations, a portion of liquid nitrogen **114** is extracted from main cryogenic tank **102** and sent to a liquid nitrogen user **116.** Liquid nitrogen user **116** will utilize liquid nitrogen stream **103** for internal refrigeration purposes. Liquid nitrogen stream **103** will thus be vaporized and vaporized nitrogen stream **104** will be recirculated to main cryogenic Tank **102.**

Simultaneously, a portion of liquid nitrogen **114** is extracted from main cryogenic tank **102** as warm recirculation stream **107** and sent to recirculation pump **110.** The pressurized liquid nitrogen then enters sub-cooler **106.** Sub-cooler **106** will cool the liquid nitrogen by at least several degrees Celsius. Subcooled recirculation stream **108** is then returned to main cryogenic tank **102** where it is introduced into vapor phase **115** as a spray. When contacted with the subcooled liquid, vaporized nitrogen stream **104,** returning from liquid nitrogen user **116,** is cooled and condenses back to saturated liquid **114.**

Main cryogenic tank **102** may include first pressure transmitter **119.** First pressure transmitter **119** may interface with one or more peripheral interface controller (PIC). First PIC **120** is functionally connected to both first pressure transmitter **119** and recirculation control valve **109.** Sub-cooler bypass line **118,** is fluidically connected to warm recirculation stream **107** and subcooled recirculation stream **108,** thereby allowing at least a portion of the pressurized recirculation stream exiting recirculation pump **110** to bypass sub-cooler **106.** Sub-cooler bypass line **118** may include second pressure transmitter **122.** Second pressure transmitter **122** may interface with one or more PICs. Second PIC **123** is functionally connected to both second pressure transmitter **122** and bypass control valve **125.** Third PIC **124** is functionally connected to both second pressure transmitter **122** and recirculation pump **110.**

The pressure within main cryogenic tank **102** is primarily controlled by recirculation control valve **109** on the subcooled recirculation stream **108** exiting sub-cooler **106**

The reliquefaction system also includes a liquid buffer tank **111,** a buffer tank transfer stream **112,** and a buffer tank transfer control valve **113.** Liquid buffer tank **111** may be refilled as needed from an external liquid nitrogen source **117,** such as a liquid nitrogen truck trailer (not shown).

In the following embodiments, for ease of explanation and to avoid unnecessary confusion, a system with two trains (Train A and Train B) is illustrated. One of ordinary skill in the art will recognize that the same methods described are easily applicable to 3 or more trains if such design considerations are desired.

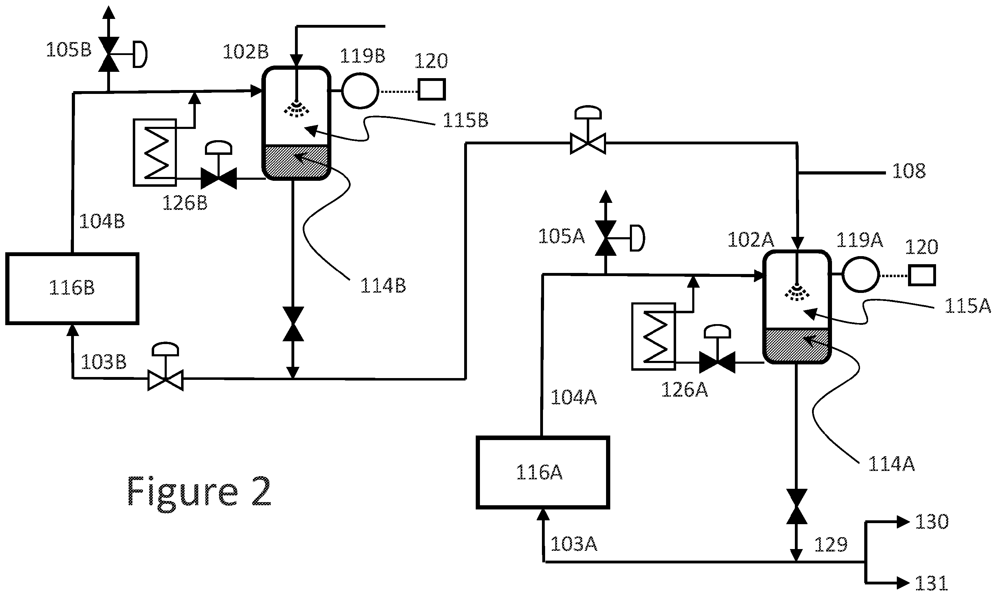

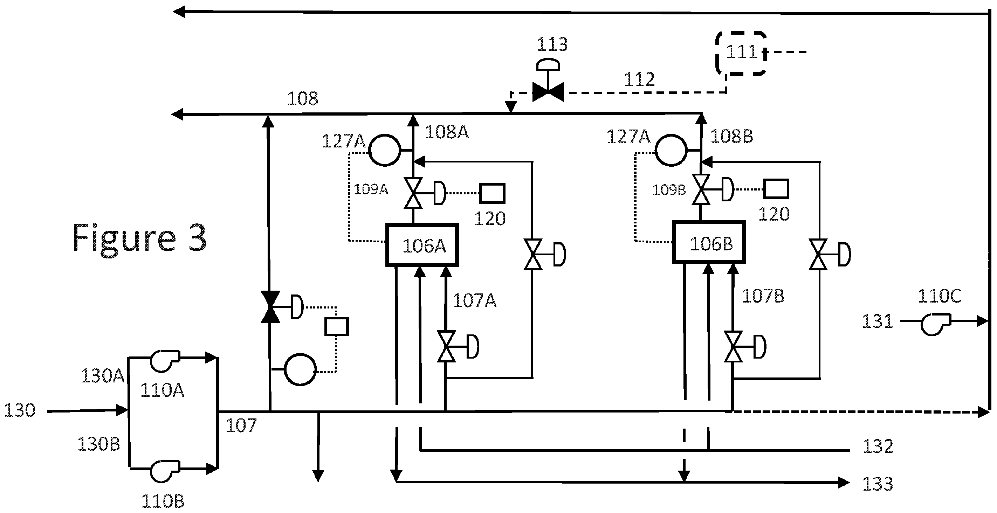

One embodiment of the present invention is schematically illustrated in Figures 2 and 3. A reliquefaction system includes first cryogenic tank **102A,** second cryogenic tank **102B,** first liquid nitrogen stream **103A,** second liquid nitrogen stream **103B**, first vaporized nitrogen stream **104A**, second vaporized nitrogen stream **104B,** first vent valve **105A** fluidically attached to first vaporized nitrogen stream **104A,** and second vent valve **105B** fluidically attached to second vaporized nitrogen stream **104B.**

The reliquefaction system also includes first sub-cooler **106A**, second sub-cooler **106B,** warm recirculation stream **107,** first warm recirculation stream portion **107A,** second warm recirculation stream portion **107B,** subcooled recirculation stream **108,** first subcooled recirculation stream portion **108A,** second subcooled recirculation stream portion **108B,** first recirculation control valve **109A**, second recirculation control valve **109B**, first recirculation pump **110A**, second recirculation pump **110B**, and third recirculation pump **110C.**

First sub-cooler **106A** and second sub-cooler **106B,** as well as any potential additional sub-coolers, may be cooled by cooling water supply line **132** and cooling water return line **133.**

In one embodiment of the present invention, liquid cryogen is subcooled using 2 or more sub-cooling systems in parallel. These 2 or more subcooling systems can be of similar or different cooling capacity. The interest of using subcooling systems in parallel is to increase the overall availability of the plant as well as to increase the cooling capacity of the reliquefaction plant.

The pressure in first cryogenic tank **102B** is maintained between 2 desired maximum values by means of both a first pressure building coil **126A** if pressure reaches a predetermined minimum threshold, and first vent valve **105A** if pressure reaches a predetermined maximum threshold.

First and second pressure building coils **126A/B** are well known in the art. They are typically ambient temperature vaporizers that use heat from the environment to vaporize a small amount of the cryogenic liquid **114A** in the tank. This small amount of vaporized liquid is then readmitted into the tank in order to maintain or increase the internal pressure as required.

The pressure in first cryogenic tank **102B** is controlled to a constant value which is set to be between the predetermined minimum and predetermined maximum pressure values defined above. The control of this pressure is ensured by a pressure controller **127A/B** acting on sub-cooler outlet valves **109A/B.** A lead-lag control scheme is implemented so that the next sub-cooler cooling capacity only increases once the outlet valve of the previous one is fully open or nearly fully open.

As used herein, the term "at or near design capacity" is defined as meaning within 80% of the design capacity, preferably within 90% of the design capacity, and more preferably within 95% of the design capacity.

As used herein, the term "lead-lag system" is defined as one wherein when the system demand exceeds the design capacity of a single unit, and when the "lead" device is at or near its design capacity, a "lag" device is activated and utilized to meet the system demand. Such "lead-lag" systems are well known in the art.

As used here, the term "fully open or nearly fully open", in reference to a valve, is defined as meaning within 80% of the fully open position, preferably within 90% of the fully open position, and more preferably within 95% of the fully open position.

Each sub-cooler controls the temperature of the sub-cooled liquid cryogen at their respective outlet. The temperature set point can be the same for each sub-cooler and should be a few Celsius below the Saturation Temperature in the associated cryogenic tank **102A/B** (typically 10 Celsius less).

In order to balance the flow correctly through each sub-cooler, the following must be taken into consideration:
- the cooling duty of that sub-cooler (typically the speed of the associated turbo machines)
- the difference between the temperature downstream the sub-cooler and the temperature set point.

A sub-cooler that is being used at full capacity or almost full capacity, with an outlet temperature higher than the set point while extra capacity is still available on other sub-cooler(s), will receive too much flow compared to the others. A specific controller acting on the maximum or close to maximum opening of the valve downstream this sub-cooler will allow reducing the flow on this sub-cooler in this specific condition.

In another embodiment of the present invention, during nominal operation conditions, the liquid nitrogen from first cryogenic tank **102A** is sub-cooled in one or more sub-cooling units set in parallel. The sub-cooled nitrogen is then sprayed in first cryogenic tank **102A** and mixed with superheated vapors **104A** from the first liquid cryogenic fluid user **116A**.

Second cryogenic tank **102B** is maintained and operated at a higher pressure than first cryogenic tank **102A**. First liquid cryogenic fluid stream **103A** from first cryogenic tank **102A** is colder than second liquid cryogenic fluid stream **103B** and is pumped up to second cryogenic tank **102B** pressure and mixed with superheated vapors **104B** from second liquid cryogenic fluid user **116B.**

Liquid cryogenic fluid **114B** from second cryogenic tank **102B** is transferred back to first cryogenic tank **102A** through return conduit **128** in order to maintain the level of liquid cryogenic fluid **114A** in first cryogenic tank **102A.** If sub-cooler **106A/B** are turned down or stopped, the system can still operate for both levels of temperature. Liquid cryogenic fluid stream **103A/B** that is being vaporized by liquid cryogenic fluid user **116A/B** is then vented through vent valve **105A/B.**

If the inventory of liquid cryogenic fluid **114A** is approaching a lower limit in first cryogenic tank **102A**, liquid cryogenic fluid **114B** from second cryogenic tank **102B** can be used to supply first cryogenic tank **102A.** If the inventory of liquid cryogenic fluid **114B** is approaching a lower limit in second cryogenic tank **102B,** liquid cryogenic fluid **114A** from first cryogenic tank **102A** can be used to supply second cryogenic tank **102B** through warm cryogenic liquid supply line **131** using transfer pump **110C.**

Additional sub-coolers **106** can be added to the previously described system. Each sub-cooler **106A/B** can be configured to provide the same cooling temperature if desired. The increased number of sub-cooling units helps the overall capacity and availability of the system:
In one embodiment, each sub-cooler **106A/B** may be disconnected from first cryogenic tank **102A,** and only be connected to second cryogenic tank **102B.** This configuration allows a higher efficiency of the overall cooling system when one of the cryogenic tanks **102A/B** is operated at a higher temperature than the other one.

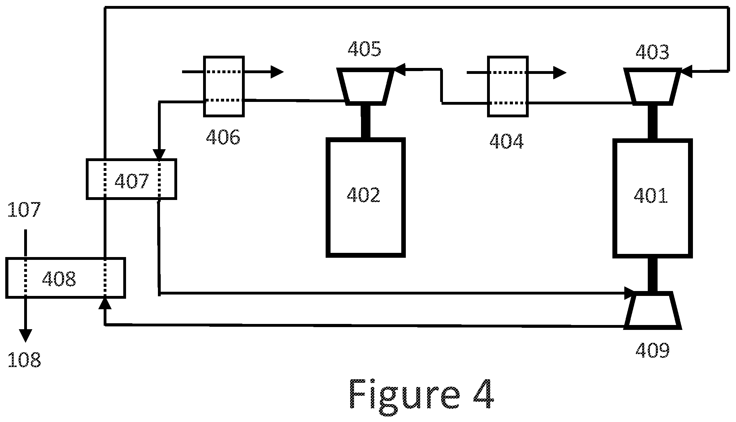

Turning to Figure 4, a typical Turbo-Brayton cycle is presented. The Turbo-Brayton is a low-temperature refrigerating device, typically between -100°C. and - 273°C, and therefore cryogenic). This is a closed working circuit containing a working fluid cycle which a cryogenic temperature. The cooled working fluid undergoes heat exchange with warm recirculation stream **107** to extract heat from it by means of sub-cooler heat exchanger **408.**

The working circuit comprises, arranged in series: first compression stage **403,** second compression stage **405** (preferably isentropic or substantially isentropic), intercooler **404,** aftercooler **406,** and recuperative heat exchanger **407** for cooling the fluid (preferably isobaric or substantially isobaric), a turboexpander **409** for expansion of the fluid (preferably isentropic or substantially isentropic) and recuperative heat exchanger **407,** and sub-cooler heat exchanger **408** for heating the fluid (preferably isobaric or substantially isobaric).

The typical Turbo-Brayton system comprises first motor **401,** and second motor **402,** preferably electric, for driving first compression stage **403** and second compression stage **405** respectively. Turboexpander **409** typically comprises a centripetal type turbine driving first motor **401.** More precisely turboexpander **409** aids first motor **401** in driving the first compression stage.

Thus, the device uses two motors **401/402** and second motor **402** drives, only at one of its ends, second compression stage **405.** Second compression stage **405** is located downstream of first compression stage **403** (downstream refers to the direction of circulation of the working fluid in the circuit 10).

This novel architecture makes it possible to distribute the overall increase in enthalpy, Δhs, over the two compression stages and consequently makes it possible to reduce the increase in enthalpy, Δhs, of one stage and increase the specific speed of the compression stages to get closer to the optimum specific speed for each compressor.

This overall increase in enthalpy, Δhs, is distributed between the two compression stages **403/405,** again making it possible to increase the specific speed of the compression stages and approach or reach the optimum specific speed. Owing to this novel architecture, the two compression stages **403/405** can operate close to or at the optimum specific speed (and not only the first stage as was the case in the prior art).

In one operating mode, the two motors **401/402** are identical, the speeds of the two motors are identical and the specific speeds of the two compressors **403/405** are identical and optimum.

In another operating mode, the two compression stages **403/405** may be controlled by variable speed motors, and operate at different speeds to operate close to or at the optimum specific speed also in the case when the mechanical power and/or the rotary speed of the two motors **401/402** are different. The compression ratios of the two compression stages **403/405** may be selected so that the specific speed of the two compression stages is as close as possible to the optimum value.

Turning back to Figures 2 and 3, in another embodiment of the present invention, a liquid cryogen may be sub-cooled using two or more sub-cooling systems in parallel. These two or more sub-cooling systems can be of similar or different cooling capacity. The interest of using sub-cooling systems in parallel is to increase the overall availability of the plant as well as to increase the cooling capacity of the plant.

As discussed above with respect to a Turbo-Brayton system, some sub-cooler systems require a variable speed system during the start-up and/or to control the operation of their turbomachinery in an efficient way between reduced and high load. In case of a system with multiple sub-coolers of the same size, one can envision sharing variable speed systems between those different sub-coolers. When one sub-cooler is started, then a variable speed system will be used for controlling its ramp up. When a load close to the maximum cooling power of the sub-cooler is reached and some extra cooling is needed, then the variable speed system linked to the aforementioned sub-cooler will be switched to another sub-cooler to be started and the sub-cooler close to the maximum cooling power will be linked to the electrical network before the variable speed system switching. During this transition, the sub-coolers' system will not be able to follow the variation of the load so some liquid nitrogen from the first cryogenic tank **102B** will be used to compensate this lack of refrigeration supply from the sub-coolers.

In case two sub-coolers are installed, then one variable speed system can be shared between each turbomachine of each sub-cooler. In the case where N equals 2, only one variable speed system (i.e. N-1) is present. In case where N is greater than 2, one or more variable speed system (i.e. N-2) is present. The variable speed systems may be shared between the N sub-cooler's turboexpanders.

As a non-limiting example where N = 3, there will be 1 variable speed system and 2 constant speed systems present. In such a situation, when turboexpander 1 (with the variable speed system) is at or near design capacity, turboexpander 2 (next in the series) will be started and ramped up. Once at speed, the variable speed system is switched from turboexpander 1 to turboexpander 2, and turboexpander 1 now is operated at constant speed. As used here, the term "at or near design capacity" is defined as meaning within 80% of the design capacity, preferably within 90% of the design capacity, and more preferably within 95% of the design capacity.

It will be understood that many additional changes in the details, materials, steps and arrangement of parts, which have been herein described in order to explain the nature of the invention, may be made by those skilled in the art within the principle and scope of the invention as expressed in the appended claims. Thus, the present invention is not intended to be limited to the specific embodiments in the examples given above.

## Claims

1. A method for increasing the reliability and availability of a cryogenic fluid reliquefaction system, comprising at least a main cryogenic tank, a recirculation pump, at least N sub-coolers, the reliquefaction system wherein N equals 2 or N is greater than 2, the N sub-coolers comprising a motor and a compressor with a design capacity, and at least one variable speed system to control the speed of at least one motor, and
• N-1 variable speed systems to be shared between the motors and compressors if N equals 2, or
• N-2 variable speed systems to be shared between the motors and compressors if N is greater than 2,
the method comprising:
• connecting a reliquefaction system to a liquid cryogenic fluid user which is then supplied a liquid cryogenic fluid,
• vaporizing the liquid cryogenic fluid within the liquid cryogenic fluid user,
• sending the vaporized cryogenic fluid back to the main cryogenic tank,
wherein
• when a first motor and compressor with a variable speed system is at or near design capacity,
∘ the first motor is disengaged from the variable speed system and connected to an existing power grid, thus freeing the variable speed system,
∘ the variable speed system is engaged to a second motor and compressor,
∘ the second motor and compressor is then started.

2. The method of claim 1, wherein the cryogenic fluid is selected from the group consisting of nitrogen, helium, argon, oxygen, krypton, xenon, carbon dioxide, methane, ethane, propane, hydrogen, and combinations thereof.

## Patentansprüche

1. Verfahren zum Erhöhen der Zuverlässigkeit und Verfügbarkeit eines Rückverflüssigungssystems für ein kryogenes Fluid, umfassend mindestens einen Hauptkryogentank, eine Rezirkulationspumpe, mindestens N Subkühler, das Rückverflüssigungssystem, wobei N gleich 2 ist oder N größer als 2 ist, die N Subkühler einen Motor und einen Kompressor mit einer Auslegungskapazität und mindestens ein System mit variabler Drehzahl zum Steuern der Drehzahl mindestens eines Motors umfassen, und
• N-1 drehzahlvariable Systeme, die zwischen den Motoren und Kompressoren geteilt werden, wenn N gleich 2 ist, oder
• N-2 drehzahlvariable Systeme, die zwischen den Motoren und Kompressoren geteilt werden, wenn N größer ist als 2,
das Verfahren Folgendes umfassend:
• Verbinden eines Rückverflüssigungssystems mit einem Verbraucher eines flüssigen kryogenen Fluids, dem dann ein flüssiges kryogenes Fluid geliefert wird,
• Verdampfen des flüssigen kryogenen Fluids in dem Verbraucher des flüssigen kryogenen Fluids,
• Zurückschicken des verdampften kryogenen Fluids in den Hauptkryogentank,
wobei
• wenn ein erster Motor und Kompressor mit einem drehzahlvariablen System bei oder in der Nähe der Auslegungskapazität sind,
∘ der erste Motor von dem drehzahlvariablen System getrennt und an ein vorhandenes Stromnetz angeschlossen wird, wodurch das drehzahlvariable System frei wird,
∘ das drehzahlvariable System zu einem zweiten Motor und Kompressor zugeschaltet wird,
∘ der zweite Motor und Kompressor dann gestartet werden.

2. Verfahren nach Anspruch 1, wobei das kryogene Fluid aus der Gruppe ausgewählt ist, bestehend aus Stickstoff, Helium, Argon, Sauerstoff, Krypton, Xenon, Kohlendioxid, Methan, Ethan, Propan, Wasserstoff und Kombinationen davon.

## Revendications

1. Procédé pour augmenter la fiabilité et la disponibilité d'un système de reliquéfaction de fluide cryogénique, comprenant au moins un réservoir cryogénique principal, une pompe de recirculation, au moins N sous-refroidisseurs, le système de reliquéfaction, N étant égal à 2 ou N étant supérieur à 2, les N sous-refroidisseurs comprenant un moteur et un compresseur avec une capacité nominale, et au moins un système à vitesse variable pour commander la vitesse d'au moins un moteur, et
• N-1 systèmes à vitesse variable à partager entre les moteurs et les compresseurs si N est égal à 2, ou
• N-2 systèmes à vitesse variable à partager entre les moteurs et les compresseurs si N est supérieur à 2,
le procédé comprenant :
• la connexion d'un système de reliquéfaction à un utilisateur de fluide cryogénique liquide qui est ensuite alimenté en fluide cryogénique liquide,
• la vaporisation du fluide cryogénique liquide à l'intérieur de l'utilisateur de fluide cryogénique liquide,
• le renvoi du fluide cryogénique vaporisé vers le réservoir cryogénique principal,
dans lequel
• lorsqu'un premier moteur et un compresseur avec un système à vitesse variable sont à leur capacité nominale ou proche de celle-ci,
∘ le premier moteur est désengagé du système à vitesse variable et connecté à un réseau électrique existant, libérant ainsi le système à vitesse variable,
∘ le système à vitesse variable est engagé avec un deuxième moteur et un deuxième compresseur,
∘ le deuxième moteur et le deuxième compresseur sont alors démarrés.

2. Procédé selon la revendication 1, le fluide cryogénique étant choisi parmi le groupe constitué de l'azote, de l'hélium, de l'argon, de l'oxygène, du krypton, du xénon, du dioxyde de carbone, du méthane, de l'éthane, du propane, de l'hydrogène et de combinaisons de ceux-ci.
